# EUROPÄISCHE PATENTSCHRIFT

(11) **EP 1 251 444 B1**
(45) Veröffentlichungstag und Bekanntmachung des Hinweises auf die Patenterteilung: **12.10.2005**
(21) Anmeldenummer: 01710024.9
(22) Anmeldetag: 20.04.2001
(51) Int. Cl.: G06F 17/60, G06F 17/50

(54) **Verfahren zur Konfigurierung eines Produkts oder einer Produktkombination auf einem PC**
Method for the configuration of a product or a product combination with a PC
Méthode pour configurer un produit ou une combinaison de produits sur un ordinateur personnel

(43) Veröffentlichungstag der Anmeldung: 23.10.2002
(73) Patentinhaber: FESTO AG & Co, 73734 Esslingen (DE)
(72) Erfinder: Machau, Norbert, 73035 Göppingen (DE); Zhou, Hong, Dr., 73779 Deizisau (DE); Lang, Robert, 73734 Esslingen (DE)
(74) Vertreter: Vetter, Hans

(56) Entgegenhaltungen:
- EP-A- 0 801 355
- EP-A- 1 087 342
- WO-A-98/52144
- DE-A- 19 940 209
- CHRISTIAAN J.J. PAREDIS, ANTONIO DIAZ-CALDERON, RAJARISHI SINHA, PRADEEP: "Composable Models for Simulation-Based Design " ICES-INSTITUTE FOR COMPOSABLE MODELS FOR SIMULATION-BASED DESIGN, [Online] 21. April 2000 (2000-04-21), XP002192383 Gefunden im Internet: <URL:http://citeseer.nj.nec.com/429339.htm l> [gefunden am 2002-03-07]

## Beschreibung

Die Erfindung betrifft ein Verfahren zur Konfigurierung eines Produkts oder einer Produktkombination auf einem PC. In bekannter Weise bieten heutzutage Hersteller und Vertriebsgesellschaften einen Internet-Dienst an, bei dem der Kunde mit seinem PC über das Internet einen Zugriff zu den angebotenen Waren erhält. Er kann Abbildungen der angebotenen Waren einschließlich deren Beschreibung und Preise ansehen und die von ihm gewünschten Waren aussuchen, die er dann in einen "Warenkorb" legt. Diesen Warenkorb kann er dann über die Internet-Verbindung bestellen.

Bei komplexeren technischen Produkten, die zum einen in sehr vielen Variationen erhältlich sind und die zum anderen untereinander angepasst sein müssen, ist die bekannte Art der Warenbestellung nicht mehr sinnvoll durchführbar, da konstruktive und adaptive Anforderungen hinzukommen, die erst dem Kunden das von ihm gewünschte oder geforderte Produkt eröffnen und zugänglich machen.

Aus der DE 199 40 209 A ist ein Verfahren und eine Anordnung zur Konfiguration eines aus mehreren Komponenten bestehenden Produkts mit Hilfe eines Konfigurationsprogramms bekannt, bei dem die darzustellenden Einzelteile bzw. Produktdaten einer CAD-Datenbank bzw. Produktdatenbank entnommen werden. Diese schränkt zum einen die Gestaltungsmöglichkeiten ein, da nur in der Datenbank enthaltene Einzelteile und Produktdaten aufgerufen werden können, und zum anderen müssen jeweils sehr große Datenmengen bearbeitet werden.

Aus der WO 9852144 A ist ein ähnliches Verfahren und eine ähnliche Anordnung bekannt, die dieselben Nachteile aufweist. Die der Datenbank entnommenen Darstellungen werden durch CAD-Modellierungswerkzeuge angepasst bzw. modelliert. Auch dies erfordert die Verarbeitung großer Datenmengen und eine entsprechend langsame Verarbeitung, die von der Rechenleistung des PC des Anwenders abhängt.

Eine ebenfalls entsprechend arbeitende Anordnung ist aus der EP-A-1 087 342 bekannt, bei der noch die Möglichkeit besteht, die übernommenen CAD-Daten mit einer Animationssoftware zu bearbeiten, um Videofiles zu erzeugen. Dabei handelt es sich jedoch nicht um die Wiedergabe eines konfigurierten Produkts oder einer konfigurierten Produktkombination in der jeweiligen Funktionsweise, sondern um die Präsentation des Zusammenbaus oder der Zerlegung des konfigurierten Produkts aus den Einzelkomponenten bzw. in die Einzelkomponenten.

Eine Aufgabe der vorliegenden Erfindung besteht somit darin, ein Verfahren der eingangs genannten Gattung aufzuzeigen, durch das ein Kunde oder sonstiger Interessent ein von ihm gewünschtes Produkt oder eine von ihm gewünschte Produktkombination eines bestimmten Herstellers auch bei komplexerer Technik selbst an seinem PC konfigurieren kann, wobei die Rechenleistungen eines Client-Server-Systems möglichst optimal eingesetzt werden sollen.

Diese Aufgabe wird erfindungsgemäß durch die Merkmale des Anspruchs 1 gelöst.

Durch das erfindungsgemäße Verfahren kann der Kunde oder sonstige Anwender an seinem PC auf die eine höhere Rechenleistung aufweisende Datenverarbeitungsanlage des Produktherstellers zugreifen und ein von ihm gewünschtes Produkt oder eine von ihm gewünschte Produktkonfiguration menügeführt anhand der von ihm gewünschten technischen Vorgaben konfigurieren. Die erforderlichen Einzelkomponenten werden dabei automatisch oder menüunterstützt ausgewählt, so dass in einfacher Weise ein gemäß seinen Vorgaben funktionsfähiges Produkt oder eine funktionsfähige Produktkombination erzeugt wird. Das Konfigurationsergebnis und die benötigten Einzelkomponenten werden einschließlich ihrer technischen Angaben dargestellt und simuliert. Dies eröffnet dem Anwender die Möglichkeit, die von ihm gewünschten Dimensionierungs- und Arbeitsparameter zu variieren, wobei dann automatisch eine Anpassung der Einzelkomponenten bzw. des Produkts oder der Produktkombination entsprechend erfolgt.

Mit Hilfe der Datenverarbeitungsanlage des Produktherstellers wird in vorteilhafter Weise die Darstellung der Produkte, Produktkombinationen und/oder Einzelkomponenten zur Laufzeit generiert, und wird bei erfolgter Umkonstruktion bzw. Adaption entsprechend durch ein CAD-Programm visuell angepasst und ermittelt. Die Möglichkeit der visuellen Anpassung erleichtert es dem Anwender, einen Eindruck des von ihm konfigurierten Produkts oder der von ihm konfigurierten Produktkombination zu bekommen und erleichtert ihm die Einschätzung, ob das Produkt in dieser Weise von ihm gewünscht oder einsetzbar ist.

Durch die in den Unteransprüchen aufgeführten Maßnahmen sind vorteilhafte Weiterbildungen und Verbesserungen des im Anspruch 1 angegebenen Verfahrens möglich.

Vorteilhafterweise werden zunächst Standardkomponenten und bei Bedarf Variantenprodukte ausgewählt, die entsprechend den Parametervorgaben umkonfiguriert und/oder adaptiert werden, wobei vorzugsweise nicht realisierbare Parameterkombinationen angezeigt werden. Das erfindungsgemäße Verfahren geht somit über den Einsatz von Standardkomponenten hinaus und greift auf Variantenprodukte zu, die individuell konfiguriert und an den Kundenwunsch angepasst werden. Es entstehen so quasi vom Kunden konstruierte Neuprodukte, die dennoch vom Produkthersteller realisiert werden können.

Die Konfiguration, Adaption und vorzugsweise auch die Simulation erfolgen entsprechend den Parametervorgaben programmgesteuert und automatisch, so dass der Kunde bei einer Änderung eines Dimensionierungs- und Arbeitsparameters sofort die sich daraus ergebenden Konsequenzen für das konfigurierte Produkt erkennt und darüber hinaus feststellen kann, ob eine derartige Parameterkombination überhaupt technisch realisierbar ist.

Zur Erleichterung und Vereinfachung der Konfiguration erfolgt die Dimensionierung und Parametrierung der Produkte, Produktkombinationen und/oder Einzelkomponenten mittels Bildschirmmasken und entsprechenden Eingabefenstern, die dem Anwender gleichzeitig die gegebenen Möglichkeiten erschließen und auch begrenzen.

Beim Austausch und/oder der Modifikation einer Einzelkomponente werden die übrigen Einzelkomponenten in vorteilhafter Weise entsprechend funktionsgerecht angepasst und/oder ausgetauscht, so dass die Funktionsfähigkeit des konfigurierten Produkts oder der konfigurierten Produktkombination in jedem Falle erhalten bleibt.

In einer weiteren vorteilhaften Ausbildung des Verfahrens werden die erforderlichen Zubehörteile automatisch ausgewählt und vorgeschlagen und/oder in das Produkt oder die Produktkombination eingefügt. Hierdurch wird verhindert, dass ein unvollständiges Produkt oder eine unvollständige Produktkombination gebildet wird. Alle technisch erforderlichen Einzelkomponenten und Zugehörteile werden somit automatisch der Konfiguration zugeführt.

Um das konfigurierte Produkt und die konfigurierte Produktkombination auch praktisch realisieren zu können, wird menügesteuert nach der Konfigurierung in einer weiteren Ausgestaltung des Verfahrens eine Produktliste erstellt, die vorzugsweise einem Warenkorb zugeführt wird. Ebenfalls vorteilhaft erweist es sich dabei, dass die Produktliste automatisch geprüft und Verfügbarkeitsdaten und/oder Preise übermittelt werden.

Die Daten können entweder vollständig über die Datenverbindung von der Datenverarbeitungsanlage des Produktherstellers abgerufen werden, es kann sich jedoch auch als zweckmäßig erweisen, das Konfigurierungsprogramm und/oder Produktdaten wenigstens teilweise auch auf einem Datenträger, beispielsweise einem CD- oder DVD-Datenträger, zu speichern, der im PC des Anwenders verwendet wird. Hierdurch kann eine Beschleunigung der Konfigurierung erreicht werden, insbesondere im Hinblick auf die Datenübertragungsrate großer Datenmengen, wie Bilddaten, über das Internet.

Das erfindungsgemäße Verfahren wird im Folgenden anhand von Ausführungsbeispielen erläutert. Es zeigen:
- Fig. 1: eine Menüdarstellung zur Parametrierung eines Linerantriebs und
- Fig. 2: eine Menüansicht zur Komponentenauswahl und zur Wiedergabe der errechneten Eigenschaften.

Um ein bestimmtes Produkt oder eine Produktkombination zu konfigurieren, wählt der Kunde oder Anwender mit Hilfe seines PC (Personal Computer) über das Internet die Datenverarbeitungsanlage des Produktherstellers an. Von diesem erhält er die zugehörige Internet-Adresse, die ihm einen Zugriff auf das in der Datenverarbeitungsanlage des Produktherstellers vorhandene Konfigurationsprogramm gestattet. Zusätzlich kann ihm vom Produkthersteller auch ein Datenträger, beispielsweise ein CD- oder DVD-Datenträger, zur Verfügung gestellt werden, auf dem sich Teile des Konfigurationsprogramms oder Produktdaten befinden, um nicht sämtliche Daten über das Internet oder ein sonstiges Netzwerk abrufen zu müssen.

Ist die Verbindung mit dem Konfigurationsprogramm hergestellt, so erfolgt zunächst menügesteuert die Auswahl zwischen verschiedenen Systemkonzepten. Solche Systemkonzepte hängen selbstverständlich von der jeweiligen Branche und vom Produktumfang des Herstellers ab. Bei einem Hersteller von pneumatischen Komponenten können dies beispielsweise Linearantriebe, Drehantriebe, Ventilinseln bzw. -anordnungen, Handhabungsgeräte oder dergleichen sein. Weiterhin ist auch die Eingabe von Untergruppen derartiger Systemkonzepte möglich, beispielsweise bei Antrieben kolbenstangenlose oder Kolbenantriebe.

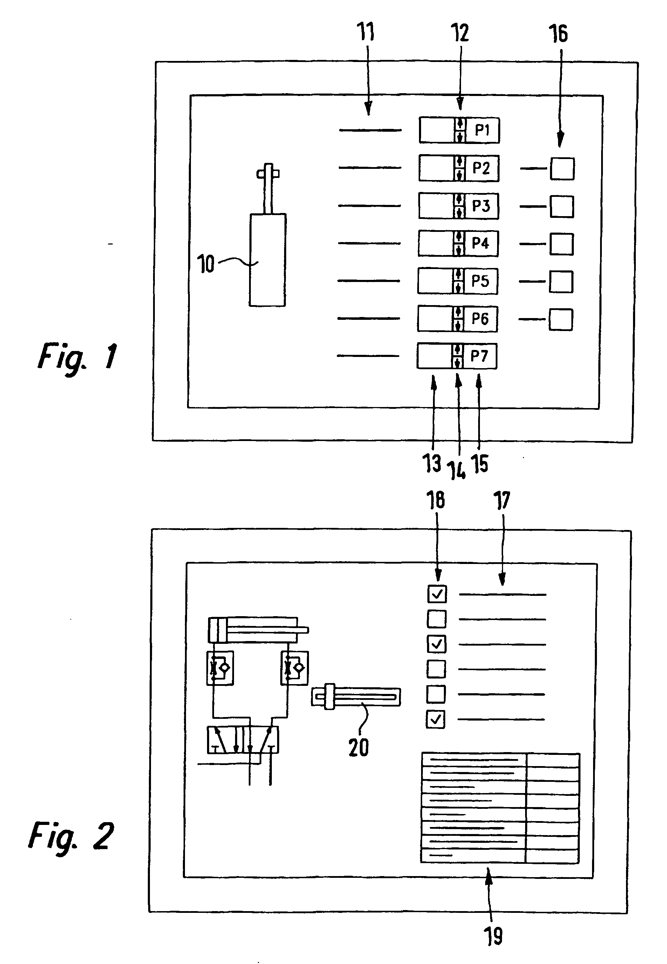

Im dargestellten Ausführungsbeispiel wird als Systemkonzept ein Linearantrieb ausgewählt. Zur Parametrierung wird daraufhin eine Bildschirmmaske gemäß Fig. 1 aufgerufen, in der ein Linearantrieb 10 zunächst schematisch in Form eines Arbeitszylinders 10 dargestellt und die Parametrierungsmöglichkeiten 11 aufgelistet werden. Daneben werden Eingabefenster 12 für die Parameter P1 bis P7 wiedergegeben. Diese enthalten neben den eigentlichen Zahlen-Eingabefenstern 13 Mausbedienungsfelder 14 zum Erhöhen und Verringern der Zahlenwerte sowie Einheitenfenster 15 zur Wiedergabe der zugehörigen technischen oder physikalischen Einheiten. Bei diesen Parametern P1 bis P7 handelt es sich beispielsweise um Stellzeiten, stellgeschwindigkeiten, Hub, Zylinderlänge, Kraft, bewegte Masse, geometrische Dimensionierungen und dergleichen. Ein Menüfolge-Fensterbereich 16 gestattet die Übergänge zu anderen Menüfenstern vorwärts und rückwärts.

Nach der Parametrierung kann nun eine Umschaltung auf nicht dargestellte Auswahlmenüfenster erfolgen, über die zwischen verschiedenen möglichen Einzelkomponenten ausgewählt werden kann, die prinzipiell die gemäß Fig. 1 gemachten Vorgaben erfüllen können. Diese können als CAD-Zeichnungen zwei- oder dreidimensional dargestellt werden, wobei die erforderlichen Daten aus einem CAD-Speicher entnommen bzw. zur Laufzeit automatisch generiert werden. Dabei kann es sich um Standardprodukte oder so genannte Variantenprodukte handeln. Variantenprodukte sind solche Produkte, die nicht als Standardprodukte vorliegen und die bezüglich ihrer Länge, ihres Durchmessers, ihres Materials und dergleichen nahezu beliebig konfiguriert werden können. Entsprechend der Parametrierung wird das jeweilige Variantenprodukt dann automatisch konfiguriert und mit einer eindeutigen Typen-Nummer versehen, die für das konfigurierte Variantenprodukt typisch und für die Fertigung nachvollziehbar ist.

Nach den Auswahlschritten oder direkt nach der Parametrierung kann durch das in Fig. 2 dargestellte Ergebnismenü weitergeschaltet werden. Dort wird der Linearantrieb mit allen erforderlichen Komponenten dargestellt. Die einzelnen Komponenten werden in einer Komponentenliste 17 aufgelistet und können über Auswahlfenster 18 ausgewählt bzw. bestätigt werden. Diese Auswahlfenster 18 können auch nur optional bei einem Teil der Komponenten vorgesehen sein, während zwingend erforderliche Komponenten ohne Auswahlmöglichkeit bleiben. In einem Ergebnisprotokoll 19 werden die errechneten Eigenschaften des ausgewählten Gesamtprodukts auf der Basis der Einzelkomponenten und deren Kombination errechnet und wiedergegeben, beispielsweise die Durchschnittsgeschwindigkeit, die Maximalgeschwindigkeit, die kinetische Energie, die Durchflussgeschwindigkeit, der Luftverbrauch, Energie- und Leistungsdaten und dergleichen. Verschiedene Parameter und Einstellungen können nun optional modifiziert und das Ergebnis simuliert werden. Hierzu kann entweder auf das Parametrierungsmenü gemäß Fig. 1 zurückgegriffen werden, oder es werden beispielsweise mit der Maus Parameter über wiedergegebene Einstellschieber 20 verändert. Ein solcher dargestellter Einstellschieber 20 dient beispielsweise zur Veränderung der Luftdurchflussrate. Entsprechend dieser Veränderung werden dann automatisch die einzelnen Komponenten angepasst oder verändert, oder es werden zusätzliche Komponenten erforderlich, beispielsweise Endanschlagdämpfer, Schalldämpfer, Rückschlagventile, zusätzliche Ventile oder dergleichen. Diese ergänzen die Komponentenliste 17 und können dort ausgewählt werden. Optional erscheint dann eine Information, dass die gewünschte Parametrierung nur dann realisiert werden kann, wenn diese Zusatzkomponenten hinzugefügt werden. Durch Betätigung des entsprechenden Auswahlfensters 18 wird die jeweilige hinzuzufügende Komponente dann in die bildliche Darstellung eingefügt, in die Rechnung mit einbezogen und im Ergebnisprotokoll 19 entsprechend berücksichtigt.

Das Ergebnismenü gemäß Fig. 2 kann selbstverständlich Menüfolge-Funktionsbereiche 16 gemäß Fig. 1 aufweisen, um Übergänge zu anderen Menüs durchzuführen. Beispielsweise können zur Auswechslung von Einzelkomponenten die entsprechenden Menüfenster aufgerufen und dort aus der Liste der alternativ aufgeführten Komponenten eine andere ausgewählt werden. Diese Komponente wird dann automatisch oder auf einen entsprechenden Eingabebefehl hin in das Gesamtprodukt gemäß Fig. 2 aufgenommen und sowohl zeichnerisch als auch rechnerisch berücksichtigt.

Erforderliche Zubehörteile, wie Verbindungsschläuche, Anschlusselemente, elektrische Komponenten, Dichtungen, Befestigungen, Gehäuse und dergleichen werden entweder automatisch in einem Menüfenster gemäß Fig. 2 oder einem ähnlichen Menüfenster vorgeschlagen und können dann ausgewählt werden, oder es muss gezielt ein Zubehör-Menüfenster angewählt werden. Dabei werden nur solche Zubehörteile aufgeführt bzw. vorgeschlagen, die für das ausgewählte Produkt verwendet werden können oder gar erforderlich sind. Diese Zubehörteile können wieder an die Komponenten modifiziert und angepasst werden.

Liegt das fertig konfigurierte Produkt oder die fertig konfigurierte Produktkombination gemäß Fig. 2 vor, so kann diese neben der Prinzipdarstellung gemäß Fig. 2 auch als zwei- oder dreidimensionale Produktdarstellung wiedergegeben werden. Dabei können auch Bewegungen bildlich simuliert werden. Die Art der Darstellung kann ebenfalls menügeführt oder über Mausbefehle geändert werden, zum Beispiel Ansichten von verschiedenen Seiten, verschiedenartige Schnittdarstellungen und dergleichen. Bei der Bewegung sind sowohl elektrische als auch pneumatische Simulationen möglich.

Als nächster Menüschritt nach der Konfiguration kann eine Produktliste der Einzelkomponenten wiederum menügeführt aufgerufen werden, in der Bezeichnungen, Bestell-Nummern, Dimensionierungen und Preise wiedergegeben werden. Die Berechnung der Preise erfolgt in der Datenverarbeitungsanlage des Produktherstellers auf der Basis von Preisen von Serienkomponenten, wobei auch Preise von Variantenprodukten individuell berechnet werden. Die Endpreise werden dann auf der Basis der mit dem jeweiligen Kunden ausgehandelten Preisgruppe wiedergegeben. Die in der Liste aufgeführten Komponenten können dann einzeln oder in ihrer Gesamtheit einem Warenkorb zugeführt werden. Dieser kann dann entweder sofort in eine automatische Bestellung übergeführt werden, oder es werden zunächst Verfügbarkeitsdaten übermittelt, auf deren Basis sich dann der Kunde die Bestellung überlegen kann. Die Preise können auch beispielsweise dann erst zu diesem Zeitpunkt wiedergegeben werden.

Die Erfindung ist selbstverständlich nicht auf die Konfigurierung pneumatischer Produkte beschränkt, sondern ist prinzipiell auf alle Arten von Produkten anwendbar, die auf individuelle Bedürfnisse zugeschnitten werden müssen und/oder bei denen eine so große Typenvielfalt vorliegt, dass der Kunde ohne Hilfsmittel nicht zu einer sinnvollen Auswahl gelangen kann. Bei allen Anwendungen können neben der technischen Konfigurierung des Produkts selbstverständlich in an sich bekannter Weise noch Firmeninformationen, Kontaktadressen, Telefonnummern, Software-Downloads, herkömmliche Produktkataloge, Anwendungsbeispiele und CAD-Downloads abgerufen werden.

## Patentansprüche

1. Verfahren zur Konfigurierung eines Produkts oder einer Produktkombination auf einem PC (Personal Computer), der über eine Datenverbindung mit einer Datenverarbeitungsanlage des Produktherstellers verbindbar oder verbunden ist, wobei mittels eines auf dieser Datenverarbeitungsanlage vorhandenen Konfigurationsprogramms menügeführt ausgehend von einem auswählbaren Systemkonzept für das Produkt oder die Produktkombination dieses und/oder deren Einzelkomponenten auf dem Bildschirm des PC dargestellt werden, wobei Dimensionierungs- und Arbeitsparameter (11, 12) mit Hilfe des PC's ausgewählt und/oder eingegeben und die jeweils hierfür erforderlichen Einzelkomponenten aus in der Datenbank der Datenverarbeitungsanlage vorhandenen Einzelkomponenten entsprechend automatisch ausgewählt (17, 18) und konfiguriert werden, wobei mit Hilfe der Datenverarbeitungsanlage des Produktherstellers die Darstellung der Produkte, Produktkombinationen und/oder Einzelkomponenten zur Laufzeit generiert werden und bei einer erfolgten Umkonstruktion oder Adaption entsprechend durch ein CAD-Programm visuell angepasst und übermittelt wird, und wobei das konfigurierte Produkt und/oder die Produktkombination in ihrer Funktionsweise und/oder Bewegung auf dem PC wiedergegeben wird.

2. Verfahren nach Anspruch 1, **dadurch gekennzeichnet, dass** zunächst Standardkomponenten und bei Bedarf Variantenprodukte ausgewählt werden, die entsprechend den Parametervorgaben umkonfiguriert und/oder adaptiert werden, wobei vorzugsweise nicht realistische Parameterkombinationen angezeigt werden und/oder für solche Parameterkombinationen zusätzlich erforderliche Komponenten vorgeschlagen werden.

3. Verfahren nach Anspruch 2, **dadurch gekennzeichnet, dass** die Konfiguration und Adaption und vorzugsweise auch die Simulation entsprechend den Parametervorgaben programmgesteuert automatisch oder nach Aufforderung erfolgen.

4. Verfahren nach einem der vorhergehenden Ansprüche, **dadurch gekennzeichnet, dass** die Darstellung zwei- oder dreidimensional und/oder als Schnittdarstellung erfolgt.

5. Verfahren nach einem der vorhergehenden Ansprüche, **dadurch gekennzeichnet, dass** Funktionsdiagramme wiedergegeben werden oder abrufbar sind.

6. Verfahren nach einem der vorhergehenden Ansprüche, **dadurch gekennzeichnet, dass** die Dimensionierung und Parametrierung der Produkte, Produktkombinationen und/oder Einzelkomponenten mittels Bildschirmmasken und entsprechenden Eingabefenstern erfolgt.

7. Verfahren nach einem der vorhergehenden Ansprüche, **dadurch gekennzeichnet, dass** beim Austausch und/oder der Modifikation einer Einzelkomponente die übrigen Einzelkomponenten entsprechend funktionsgerecht angepasst und/oder ausgetauscht werden oder zur Anpassung oder zum Austausch vorgeschlagen werden.

8. Verfahren nach einem der vorhergehenden Ansprüche, **dadurch gekennzeichnet, dass** erforderliche Zubehörteile automatisch ausgewählt und vorgeschlagen und/oder in das Produkt oder die Produktkombination eingefügt werden.

9. Verfahren nach einem der vorhergehenden Ansprüche, **dadurch gekennzeichnet, dass** menügesteuert nach der Konfigurierung eine Produktliste erstellt wird, die vorzugsweise einem Warenkorb zuführbar ist.

10. Verfahren nach Anspruch 9, **dadurch gekennzeichnet, dass** die Produktliste automatisch geprüft und Verfügbarkeitsdaten und/oder Preise übermittelt werden.

11. Verfahren nach einem der vorhergehenden Ansprüche, **dadurch gekennzeichnet, dass** das Konfigurationsprogramm und/oder Produktdaten wenigstens teilweise auch auf einem Datenträger, insbesondere einem CD- oder DVD-Datenträger, gespeichert sind, der im PC des Anwenders eingesetzt wird.

## Claims

1. Method for the configuration of a product or a product combination on a PC (personal computer) which may be or is connected via a data connection to a computer system of the product manufacturer, wherein by means of a configuration program provided on this computer system, with menu guidance and based on a selectable system concept for the product or the product combination, the latter and/or their individual components may be displayed on the screen of the PC, wherein dimensioning and operating parameters (11, 12) are selected and input with the aid of the PC, and the respective individual components required for this purpose are correspondingly automatically selected (17, 18) and configured from individual components available in the database of the computer system, wherein with the aid of the computer system of the product manufacturer, the representation of the products, product combinations and/or individual components is generated currently and, if redesign or adaptation is made, is suitable adapted visually by a CAD program and transmitted, and wherein the configured product and/or the product combination is reproduced on the PC showing its mode of operation and/or movement.

2. Method according to claim 1, **characterised in that** firstly standard components and if required variant products are selected, and are reconfigured and/or adapted according to the specified parameters, wherein preferably unrealistic parameter combinations are displayed and/or additional components required for such parameter combinations are proposed.

3. Method according to claim 2, **characterised in that** the configuration and adaptation and preferably also the simulation is effected, program-controlled and according to the specified parameters, automatically or as requested.

4. Method according to any of the preceding claims, **characterised in that** the presentation is two- or three-dimensional and/or in the form of a sectional view.

5. Method according to any of the preceding claims, **characterised in that** the function diagrams are reproduced or may be called up.

6. Method according to any of the preceding claims, **characterised in that** the dimensioning and parameterisation of the products, product combinations and/or individual components is effected by means of screen masks and suitable input windows.

7. Method according to any of the preceding claims, **characterised in that**, in the replacement and/or modification of an individual component, the other individual components are suitably modified in terms of function and/or replaced, or their adaptation or replacement is recommended.

8. Method according to any of the preceding claims, **characterised in that** necessary accessory parts are automatically selected and recommended and/or inserted in the product or product combination.

9. Method according to any of the preceding claims, **characterised in that** after configuration and with menu guidance, a product list which may preferably be sent to a basket of goods is produced.

10. Method according to claim 9, **characterised in that** the product list is automatically checked, and availability dates and/or prices are transmitted.

11. Method according to any of the preceding claims, **characterised in that** the configuration program and/or product data are also stored at least in part on a data storage medium, in particular a CD or DVD storage medium, which is inserted in the PC of the user.

## Revendications

1. Procédé de configuration d'un produit ou d'une combinaison de produits sur un PC (ordinateur personnel), qui peut être relié ou est relié via une ligne de transmission de données avec une installation de traitement des données du fabricant du produit, un programme de configuration disponible sur l'installation de traitement des données permettant à l'appui d'un menu, en partant d'un concept système sélectionnable pour le produit ou la combinaison de produits, de représenter celui-ci ou celle-ci et/ou leurs composants individuels sur l'écran du PC (ordinateur personnel), des paramètres de dimensionnement et de travail (11, 12) étant sélectionnés et/ou entrés à l'aide du PC (ordinateur personnel) et les composants individuels respectivement nécessaires à cet effet étant sélectionnés (17, 18) et configurés automatiquement de manière correspondante à partir de composants individuels disponibles dans la base de données de l'installation de traitement des données, la représentation des produits, de la combinaison de produits et/ou des composants individuels étant générée en temps d'exploitation à l'aide de l'installation de traitement des données du fabricant de produits et, en cas de reconstruction ou d'adaptation réalisée, étant adaptée et transmise visuellement de manière correspondante par un programme CAO, et le produit et/ou la combinaison de produits configurés étant reproduits sur le PC (ordinateur personnel) dans leur mode de fonctionnement et/ou leur mouvement.

2. Procédé selon la revendication 1, **caractérisé en ce qu'**il est prévu de sélectionner tout d'abord des composants standard et, en cas de besoin, des produits en variante qui, conformément aux paramètres définis, sont reconfigurés et/ou adaptés, de préférence des combinaisons de paramètres non réalistes étant affichées et/ou des composants nécessaires en plus pour ces combinaisons de paramètres étant proposés.

3. Procédé selon la revendication 2, **caractérisé en ce que** la configuration et l'adaptation et, de préférence aussi, la simulation s'effectuent conformément aux paramètres définis en mode automatique assisté par programme ou à la demande.

4. Procédé selon l'une des revendications précédentes, **caractérisé en ce que** la représentation est une représentation bidimensionnelle ou tridimensionnelle et/ou une représentation en coupe.

5. Procédé selon l'une des revendications précédentes, **caractérisé en ce que** des diagrammes fonctionnels sont reproduits ou peuvent être chargés.

6. Procédé selon l'une des revendications précédentes, **caractérisé en ce que** le dimensionnement et le paramétrage des produits, des combinaisons de produits et/ou des composants individuels sont effectués au moyen de masques d'affichage et de fenêtres de dialogue correspondantes.

7. Procédé selon l'une des revendications précédentes, **caractérisé en ce qu'**en cas d'échange et/ou de modification d'un composant individuel, les autres composants individuels sont adaptés et/ou échangés fonctionnellement de manière correspondante ou sont proposés pour une adaptation ou un échange.

8. Procédé selon l'une des revendications précédentes, **caractérisé en ce que** des accessoires nécessaires sont automatiquement sélectionnés et proposés et/ou intégrés dans le produit ou la combinaison de produits.

9. Procédé selon l'une des revendications précédentes, **caractérisé en ce qu'**une liste de produits, qui de préférence est destinée à être acheminée vers un panier, est générée à l'appui d'un menu après le processus de configuration.

10. Procédé selon la revendication 9, **caractérisé en ce que** la liste de produits est vérifiée automatiquement et des données de disponibilité et/ou des prix sont déterminés.

11. Procédé selon l'une des revendications précédentes, **caractérisé en ce que** le programme de configuration et/ou les données des produits sont stockés au moins en partie également sur un support de données, en particulier un support de données sous forme de CD ou de DVD, qui peut être introduit dans l'ordinateur personnel de l'utilisateur.
